# EUROPÄISCHE PATENTSCHRIFT

(11) **EP 1 538 369 B1**
(45) Veröffentlichungstag und Bekanntmachung des Hinweises auf die Patenterteilung: **29.08.2007**
(21) Anmeldenummer: 03104474.6
(22) Anmeldetag: 01.12.2003
(51) Int. Cl.: F16H 57/04

(54) **Ölleitkontur in einem Getriebegehäuse**
Oil guiding contour in a gearbox
Contour de guidage d'huile dans un carter de transmission

(43) Veröffentlichungstag der Anmeldung: 08.06.2005
(73) Patentinhaber: Getrag Ford Transmissions GmbH, 50725 Köln (DE)
(72) Erfinder: Godesberg, Paul, 50767, Koeln (DE); Rafael, Dirk, 50769, Koeln (DE)
(74) Vertreter: Drömer, Hans-Carsten

(56) Entgegenhaltungen:
- EP-A- 0 481 584
- GB-A- 679 402
- GB-A- 842 909
- GB-A- 1 014 598
- US-A- 3 223 196

## Beschreibung

Die Erfindung betrifft eine Ölleitvorrichtung zur Umlenkung von Öl innerhalb eines Getriebegehäuses aus einem Ölzufluss in einen Ölkanal oder dergleichen mit einer zwischen Ölzufluss und Ölkanal angeordneten Ölleiteinrichtung, die mit zwei sich gegenüberliegenden, einen Spalt bildenden Ölleitflächen versehen ist, wobei wenigstens eine der Ölleitflächen um eine Drehachse senkrecht zur Ölleitfläche drehbar angeordnet ist und wobei eine der Ölleitflächen eine Ölleitkontur aufweist, mit der Öl in radialer Richtung dem Ölkanal zuleitbar ist.

Derartige Ölleitvorrichtungen zur Umlenkung von Öl innerhalb eines Getriebegehäuses dienen dazu, Öl, das beispielsweise in einem Getriebegehäuse aus einem Ölsumpf oder von außen in das Getriebegehäuse zugeführt wird, gezielt zu dem zu schmierenden Ort, zum Beispiel in eine Getriebewelle oder in ein Lager, umzulenken. In dem US-Patent 3,223,196 wird eine Ölleitvorrichtung der eingangs genannten Art beschrieben. Hierbei ist eine drehbar gelagerte Ölleitfläche mit einer Ölleitkontur versehen, die mehrere symmetrisch angeordnete und entgegen der Drehrichtung kreisbogenförmig vom Rand der Ölleitfläche zu einem inneren, ringförmigen Ölkanal verlaufende Vorsprünge aufweist, wobei das umzulenkende Öl einem umfänglich an die Ölleitfläche angrenzenden Ölsumpf entnommen und durch die sich drehende Ölleitfläche entgegen der Zentrifugalkraft radial dem Ölkanal zugeleitet wird. Dieser Aufbau ist sehr aufwendig, da hierzu eine zusätzliche, aufwendig mit einem Profil zu versehende Ölleitfläche benötigt wird. Ferner kann ein erwünscht stetiger Volumenstrom durch die Ölentnahmefluss aus dem zum Inneren des Getriebegehäuses offenen und ringförmig um den Spalt angeordneten Ölsumpf nicht gewährleistet sein. Zudem können durch die Entnahme aus dem Ölsumpf leicht Verwirbelungen auftreten, die einen Strömungsabriss bzw. einen Strömungsstau in der Ölleitkontur bewirken können.

Die GB 679,402 offenbart ein Verfahren und eine Ölleitvorrichtung gemäß dem Oberbegriff von Anspruch 1 zum Versorgen des Inneren einer Hohlwelle, die durch ein Kugellager drehbar gehalten wird, das zwischen einem inneren Laufring und einem äußeren Laufring von einer axialen Seite her mit Öl versorgt wird, wobei das Verfahren vorsieht, an der anderen Seite des Kugellagers eine statische Ölleitfläche mit einer als Ölleitkontur ausgebildeten spiralförmigen Nut anzuordnen, die an einem äußeren Ende mit dem Zwischenraum zwischen den Laufringen des Kugellagers und an einem inneren Ende mit dem Inneren der Hohlwelle kommuniziert. Des weiteren sieht das Verfahren die Bereitstellung einer Scheibe vor, die sich mit dem inneren Laufring und der Hohlwelle dreht, wobei die statische Ölleitfläche mit der spiralförmigen Nut und die Scheibe einen Spalt bilden, sodass das in der spiralförmigen Nut befindliche Öl durch Drehung der Scheibe zum Inneren der Hohlwelle befördert wird. Die Ölmenge, die mit der Ölleitvorrichtung der GB 679,402 gefördert werden kann, ist jedoch begrenzt und kann je nach Anforderung im Einzelfall nicht ausreichen.

Aufgabe der Erfindung ist daher, eine Ölleitvorrichtung der eingangs genannten Art bereitzustellen, die nicht aufwendig ist und den oben genannten Nachteilen wirksam begegnet.

Die Erfindung ist dadurch gekennzeichnet, dass umfänglich um die Ölleitkontur eine Seitenwand angeordnet ist, die mit einer Einmündung der Ölzufuhr in den Spalt versehen ist. Durch diese Seitenwand wird der Spalt zu einer Ölleitkammer, die bis auf den Ölzufluss und den Ölabfluss (Ölkanal) sowie auf den durch die drehbare Lagerung der Leitfläche erforderlichen Spalt zwischen Leitfläche und Getriebegehäuse geschlossen ist. Hierdurch kann das durch den Ölzufluss in die Ölleitkammer einströmende Öl, dass in Folge seiner Viskosität durch die drehende Ölleitfläche tangential beschleunigt wird und entgegen der Zentrifugalkraft radial weitergeleitet werden soll, den Spalt nicht in Zentrifugalrichtung verlassen.

In einer bevorzugten Ausführung kann vollständig auf eine zusätzliche Scheibe verzichtet werden, indem, wie zum Beispiel bei einer Umlenkung von Öl in eine Getriebewelle, die Stirnseite der gelagerten Getriebewelle und die wellenseitigen Lagerbauteile als rotierende Ölleitfläche dienen. Hierbei kann sogar auf eine stirnseitige Verkleidung der Stirnseite sowie der Lagerbauteile verzichtet werden. Somit kann der Spalt, der sich konstruktiv durch die Lagerung der Getriebewelle in dem Getriebegehäuse ergibt, zugleich vorteilhaft als Ölleitvorrichtung genutzt werden.

Bevorzugt sind die Ölleitflächen kreisrund ausgebildet und weisen eine gemeinsame Mittelpunktsachse auf, die gleich der Drehachse ist. Diese vorteilhafte Ausbildung der Erfindung ermöglicht ein möglichst gleichmäßiges Strömungsverhalten des Öls in dem Spalt.

In einer Weiterbildung der Erfindung ist die Ölleitkontur mit mindestens einer Nut und/oder einem Vorsprung zur Ausbildung von mindestens einer Leitschaufel versehen, die in Drehrichtung der Ölleitfläche einen Geometrieverlauf mit einer radialen und einer tangentialen Komponente von einem äußeren Schaufelradius zu einem inneren Schaufelradius aufweist. Hierdurch wird das durch die drehbare Ölleitfläche bewegte Öl von der Ölleitkontur in Richtung der Drehbewegung sowie entgegen der auf das Öl wirkende Zentrifugalkraft radial zur Drehachse der Ölleitfläche hin umgelenkt. Konstruktionsbedingt besteht zwischen der Stegoberseite bzw. der Nutoberkante ein Abstand zu der gegenüberliegenden Ölleitfläche. Die Optimierung dieses Abstandes hängt unter anderem, wie weiter unten beschrieben, von der Viskosität des Öls ab.

In einer bevorzugten Weiterbildung der Erfindung kann die Ölleitkontur mindestens zwei Nuten und/oder Vorsprünge zur Ausbildung von mindestens zwei Leitschaufeln aufweisen, die zueinander symmetrisch bzgl. der Drehachse angeordnet sind. Das heißt, dass die beiden Leitschaufeln in einem Drehwinkel von 180° versetzt auf der Ölleitfläche angeordnet sind. Bei drei Leitschaufeln würde der Drehwinkel 120°, bei vier Leitschaufeln 90° und so weiter betragen.

Bevorzugt weisen die Leitschaufeln einen stetigen Krümmungsverlauf auf, der zum Beispiel parabelförmig oder spiralförmig ausgebildet sein kann. Besonders bevorzugt sind die Leitschaufeln sichelförmig ausgebildet. Durch die Geometrie der Leitschaufeln wird der Strömungsquerschnitt vom äußeren zum inneren Schaufelradius in Strömungsrichtung kontinuierlich verengt, damit Strömungsablösungen und Wirbelbildungen verhindert werden.

In einer Weiterbildung der Erfindung ist der äußere Schaufelradius in einem Abstand zu der Seitenwand in dem Spalt angeordnet. Hierbei ist in einer bevorzugten Ausbildung der Ölleitkammerbereich zwischen Seitenwand und äußerer Schaufelradius profillos gehalten. In diesem Ölleitkammerbereich wird das Öl durch die drehende Ölleitfläche in Drehrichtung mitgerissen, d.h. beschleunigt. Allgemein ist bekannt, dass die Strömungsgeschwindigkeit viskoser Flüssigkeiten in einer Leitung im Abstand von der Leitungswandung zunimmt. Messungen des Strömungsverhaltens viskoser Flüssigkeit in einer Kammer mit einer kreisförmigen rotierenden Seitenfläche zeigen, dass die Strömungsgeschwindigkeit an der umfänglichen Seitenwand und im Kreismittelpunkt der rotierenden Seitenflächen gleich Null ist sowie in einem Abstand von der umfänglichen Seitenflächen ein Maximum erreicht. Hierbei ist die Größe des Abstandes, in dem sich das Strömungsgeschwindigkeitsmaximum befindet, insbesondere von der Viskosität der Flüssigkeit abhängig. In einer bevorzugten Weiterbildung der Erfindung ist der äußere Schaufelradius in dem Abstand zu der Seitenwand in dem Spalt angeordnet, in dem sich zugleich das Strömungsgeschwindigkeitsmaximum befindet. Damit treffen die Ölpartikel mit maximaler Geschwindigkeit auf die an der statischen Ölleitfläche angeordnete Ölleitkontur und erfahren dadurch einen entsprechend maximalen Impuls in radialer Richtung.

In einer Weiterbildung läuft die Leitschaufel an ihrem äußeren Schaufelradius in einem äußeren Anstellwinkel von etwa 0° bis etwa 30° zur tangentialen Richtung aus. Bevorzugter beträgt der äußere Anstellwinkel etwa 0° bis etwa 12°. Unter einem Anstellwinkel wird hier der Winkel verstanden, den die Leitschaufel mit Ihrer radial zugewandten Innenseite mit der Kreistangente bildet. Über den äußeren Anstellwinkel wird ebenfalls die Größe des Impulses auf die Ölpartikel in axialer Richtung bestimmt. Ist der äußere Anstellwinkel zu groß, so können die auftreffende Ölpartikel zu stark negativ beschleunigt werden, so dass eine Stauwirkung eintreten kann, die unter Umständen ein Zurückdrücken des Öls durch den Ölzufluss bewirken kann. Durch den nahezu tangentialen Anstellwinkel am Strömungseintritt des Öls in die Ölleitkontur wird ein möglichst stoßfreier Eintritt des Öls in die Ölleitkontur erzielt.

In einer Weiterbildung läuft die Leitschaufel an ihrem inneren Schaufelradius in einem inneren Anstellwinkel von etwa 80° bis etwa 100° zur tangentialen Richtung aus. In einer bevorzugteren Weiterbildung beträgt der innere Anstellwinkel etwa 90°. Hierdurch wird das Öl, das sich außerhalb der Leitkontur durch die rotierende Ölleitfläche tangential beschleunigt und durch Leitkontur nach innen geleitet wurde, auf einen im wesentlichen radialen Strömungsfluss umgelenkt.

Bevorzugt weist die Leitschaufel an ihrem äußeren Schaufelradius eine konvex gerundete Schaufelvorderkante auf. Hierdurch wird üblicherweise die Gefahr des Auftretens von Verwirbelungen durch das Vorbeiströmen von Öl an der Schaufelvorderkante vermindert. Da eine Getriebewelle nicht nur mit einer konstanten Drehzahl betrieben wird, variiert die Umfangsgeschwindigkeit ebenfalls sehr stark. Durch einen genügend großen Schaufelvorderkantenradius werden die sonst zu starken Druckpunktveränderungen durch Anströmwinkeländerungen vermieden. Diese Druckpunktveränderungen würden die Umströmung der Schaufeln empfindlich stören, könnten zu Wirbeln und/oder Strömungsabrissen führen und eventuell die Leitkontur komplett blockieren.

Bevorzugt wird eine Ausbildung der Erfindung, in der die Ölleiteinrichtung eine an der Einmündung angeordnete äußere Umlenkvorrichtung aufweist, die auf das in den Spalt einmündende Öl einen Umlenkimpuls in Drehrichtung der Ölleitfläche ausübt. Die Form der äußeren Umlenkvorrichtung ist unter anderem von dem Winkel abhängig, in dem das durch die Ölzufuhr geführte Öl in den Spalt einströmt.

Bevorzugt ist die äußere Umlenkvorrichtung als Profilnase ausgebildet, die in Drehrichtung vor der Einmündung angeordnet ist, mit einer radialen und einer in Drehrichtung weisenden, tangentialen Wegkomponente in den Spalt hineinragt und mit einer zur Einmündung weisenden ersten Umlenkfläche zur Umlenkung des in den Spalt einmündenden Öls versehen ist. Durch die Ausbildung der äußeren Umlenkvorrichtung als Profilnase erfährt das einströmende Öl einen Impuls in die Richtung, in die es durch die drehende Ölleitfläche in dem Spalt beschleunigt wird, so dass die Wirbelbildung im Bereich des Ölzuflusses minimiert werden kann. Hierbei kann die erste Umlenkfläche bevorzugt beispielsweise eine Krümmung aufweisen, deren Krümmungsradius mit einer Komponente in Drehrichtung weist. In einer Weiterbildung kann die erste Umlenkfläche die Einmündung teilweise umfänglich in den Spalt hinein fortsetzen und hierbei bevorzugt eine zusätzliche Krümmung in Drehrichtung aufweisen. In einer konstruktiv weniger aufwendigen Ausbildung kann die erste Umlenkfläche als eine sich über die Spaltbreite erstreckende ebene Fläche ausgebildet sein.

In einer bevorzugten Ausbildung weist die äußere Umlenkvorrichtung an ihrer von der Einmündung abgewandten Seite eine zweite Umlenkfläche auf, durch die auf das in dem Spalt zwischen Seitenwand und Ölleitkontur kreisende Öl ein Umlenkimpuls mit radialer Komponente zu der Ölleitkontur hin ausgeübt wird. Bevorzugt weist diese Fläche eine Krümmung mit einer tangentialen und einer radialen Wegkomponenten auf, wobei der Krümmungsradius mit einer Komponente in Gegendrehrichtung weist. Hierdurch wird die Anströmung zu der Ölleitfläche optimiert. Ferner wird ein Zurückdrücken des in der Kammer rotierenden Öls in die Einmündung erschwert. Zudem können die in der Kammer rotierenden und an der Profilnase vorbeiströmenden Ölpartikel auf die durch die Einmündung einströmenden Ölpartikel eine Beschleunigung gemäß dem Prinzip einer Wasserstrahlpumpe ausüben.

In einer Weiterbildung weist die Ölleiteinrichtung eine in radialer Richtung an die Ölleitkontur anschließende innere Umlenkvorrichtung zur Umlenkung des durch die Ölleitkontur radial zugeleiteten Öls aus dem Spalt in den Ölkanal auf. Durch die innere Umlenkvorrichtung wird das Öl, das durch die Ölkontur radial nach innen zugeleitet wurde, aus dem Spalt in den Ölkanal umgelenkt. Hierbei kann der Ölkanal in einem ersten Abschnitt als Ringkanal ausgebildet sein, der sich im Anschluss an den inneren Schaufelradius um die Drehachse erstreckt und an den sich ein weiterer Abschnitt anschließt, durch den das Öl aus dem Ringkanal abgeleitet wird.

Bevorzugt ist der Ölkanal so angeordnet, dass er im Bereich der Drehachse in den Spalt einmündet. Weiter bevorzugt ist die Längsachse des an den Spalt angrenzenden Ölkanalbereiches gleich der Drehachse. In einer bevorzugten Weiterbildung ist die innere Umlenkvorrichtung im wesentlichen als Kegel ausgebildet, dessen Basis in der Mitte der Ölleitfläche mit der Ölleitkontur angeordnet ist und der sich mit seiner Spitze in den Ölkanal hinein erstreckt. Hierbei soll zweckmäßigerweise die Mantelfläche des Kegels im Bereich der Kegelbasis bevorzugt einen Übergang von der Kegelfläche zur Ölleitfläche aufweisen. Ferner kann der Kegel eine abgeflachte Spitze aufweisen. Bei einer Anordnung des an den Spalt angrenzenden Ölkanalbereichs senkrecht zur Ölleitfläche soll der Kegel bevorzugt als gerader Kreiskegel ausgebildet sein. Hierdurch wird ein möglichst symmetrischer Strömungsverlauf des Öls aus dem Spalt in den Rückkanal erzielt. Selbstverständlich sind auch andere Ausbildungsformen der inneren Umlenkvorrichtung, wie zum Beispiel eine einem Rotationshyperboloid oder einem Rotationsparaboloid entsprechende, möglich.

In einer bevorzugten Weiterbildung ist der Ölkanal als Getriebehohlwelle ausgebildet. Hierdurch kann das Öl bekannterweise durch die Rotation der Getriebehohlwelle durch entsprechende Öffnungen in der Getriebehohlwelle vorgesehenen Schmierstellen zugeleitet werden.

In einer ebenfalls bevorzugten Weiterbildung ist die Ölleitfläche mit der Ölleitkontur einstückig mit dem Getriebegehäuse verbunden. Hierdurch ist die Fertigung der Ölleitkontur besonders wenig aufwendig, da sie gleichzeitig mit dem üblicherweise gegossenen Getriebegehäuse mitgeformt werden kann.

In einer weiteren bevorzugten Ausführung ist die statische Ölleitfläche als separater Einsatz ausgeführt und im Getriebegehäuse eingesetzt. Damit kann ein einheitliches Getriebegehäuse je nach Anwendungsfall mit unterschiedlichen Ölleitflächen ausgerüstet werden, ohne dass das Getriebegehäuse selbst geändert werden muß. Es sind lediglich die geeigneten Einsätze zu fertigen.

Wenn hier die Ölleitvorrichtung für die Förderung von Öl beschrieben ist, erfolgt dies aus Gründen einer eindeutigen Beschreibung. Statt Öl kann mit der erfindungsgemäßen Ölleitvorrichtung auch jedes andere flüssige Medium gefördert werden, z.B. Kühlflüssigkeiten, Treibstoffe, sofern der Verwendungszweck den Einsatz der Ölleitvorrichtung erlaubt.

Die vorliegende Erfindung wird anhand eines Ausführungsbeispiels mit einer dazugehörigen Zeichnung näher erläutert. In der Zeichnung zeigen
- Fig.1: einen Ausschnitt eines Schnittes durch ein Getriebe mit einer Ölleitvorrichtung,
- Fig.2: eine schematische Aufsicht auf die Ölleitvorrichtung und
- Fig.3: einen Ausschnitt aus Fig. 2 mit der Ölleitvorrichtung.

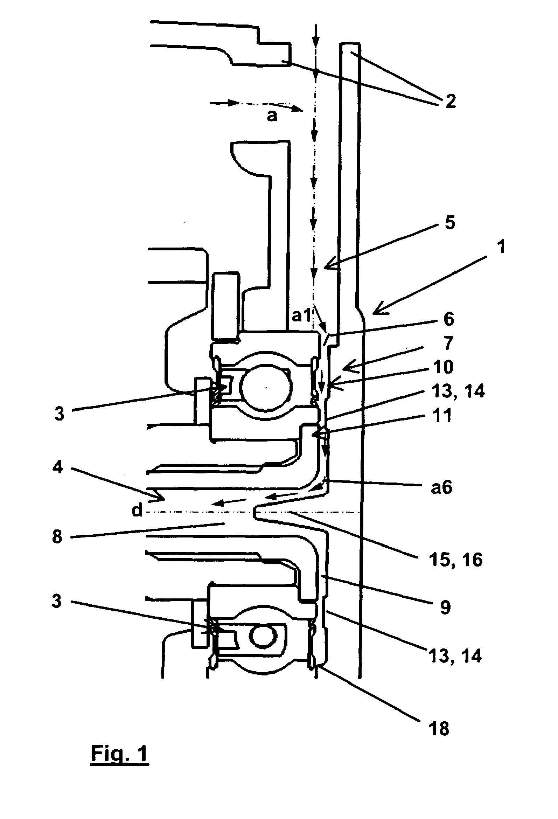

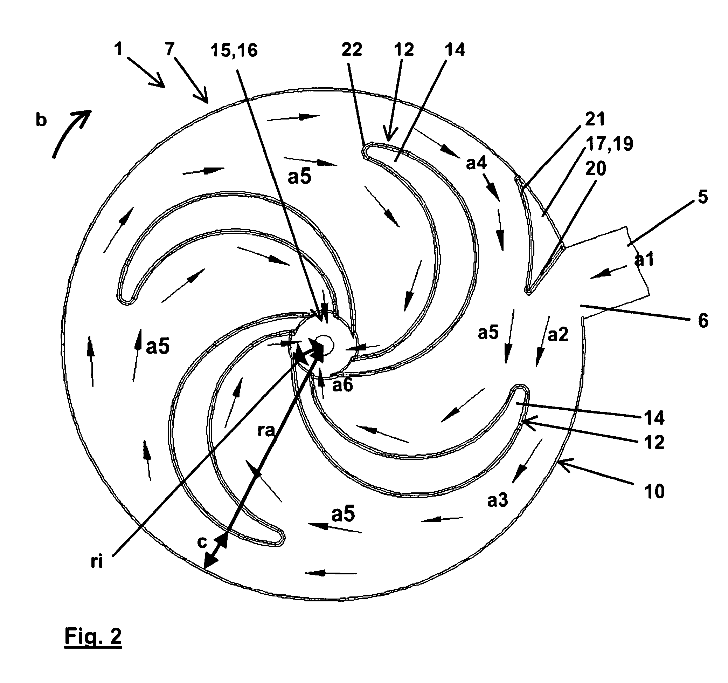

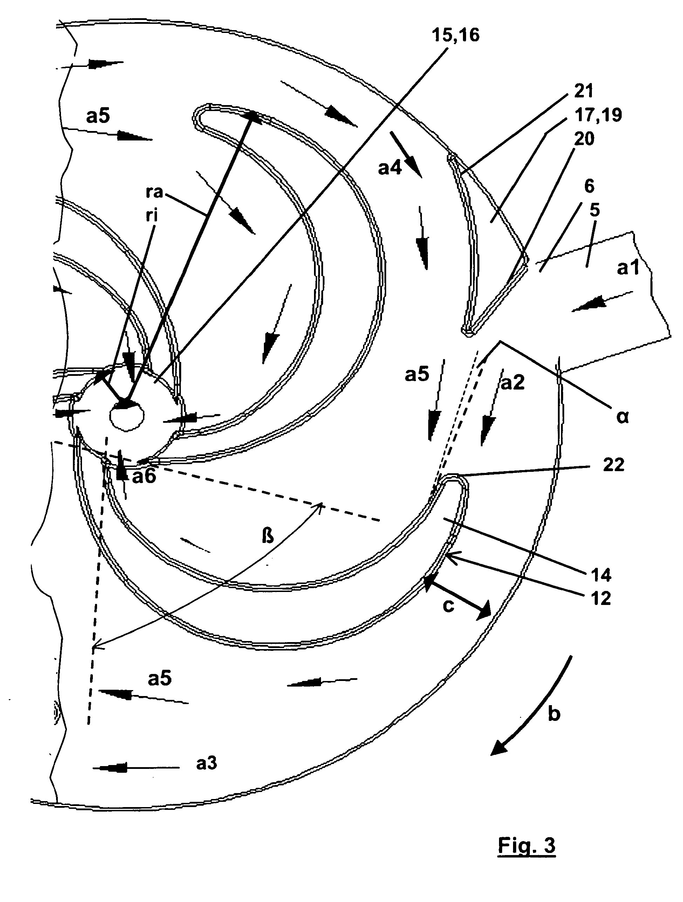

Fig. 1 zeigt einen Ausschnitt eines Schnittes durch ein Getriebe mit einer Ölleitvorrichtung 1, einem Getriebegehäuse 2 und einer in Lagern 3 gelagerte Getriebehohlwelle 4. Die Ölleitvorrichtung 1 weist einen Ölzufluss 5 mit einer Einmündung 6, eine Ölleiteinrichtung 7 und einen Ölkanal 8 auf, der in diesem Ausführungsbeispiel durch die Getriebehohlwelle 4 gebildet wird. Die Ölleiteinrichtung 7 ist mit zwei sich gegenüber liegenden, einen Spalt 9 bildenden Ölleitflächen 10, 11 versehen. Eine der beiden Ölleitflächen 10, 11 ist als statische, einstückig mit dem Getriebegehäuses 2 verbundene Ölleitfläche 10 ausgebildet, während die andere als dynamische Ölleitfläche 11 durch die der statischen Ölleitfläche 10 zugewandten Seiten der Getriebehohlwelle 4 und der Lager 3 gebildet wird. Die statische Ölleitfläche 10 ist mit einer Ölleitkontur 12 versehen, die, wie in den Fig. 2 und 3 näher dargestellt, Vorsprünge 13 zur Ausbildung von Leitschaufeln 14 aufweist. Die Ölleiteinrichtung 7 weist ferner eine in radialer Richtung an die Ölleitkontur 12 anschließende innere Umlenkvorrichtung 15 zur Umlenkung des durch die Ölleitkontur 12 radial zugeleiteten Öls aus dem Spalt 9 in den Ölkanal 8 auf. Die innere Umlenkvorrichtung 15 ist in diesem Ausführungsbeispiel als Kegelstumpf 16 ausgebildet. Ferner ist eine in Fig. 1 der Übersichtlichkeit halber nicht, jedoch in der Fig. 2 und 3 dargestellt äußere Umlenkvorrichtung 17 an der Einmündung 6 zur Umleitung des durch die Einmündung 6 in den Spalt 9 einströmenden Öls vorgesehen. Der Spalt 9 ist seitlich durch eine durch das Getriebegehäuse 2 gebildete Seitenwand 18 begrenzt, durch die die Einmündung 6 geführt ist.

In der Fig. 2 ist in schematischer Darstellung eine Aufsicht auf die Ölleitvorrichtung 1 gezeigt, deren dynamische Ölleitfläche der leichteren Darstellung wegen fortgelassen wurde und in der der Strömungsverlaufs des Öls durch kurze Ölrichtungspfeile a verdeutlicht wird. In dieser schematischen Aufsicht der Ölleitvorrichtung 1 sind der Ölzufluss 5, der an der Einmündung 6 durch die Seitenwand 18 geführt ist, die durch die Vorsprünge 13 gebildeten Leitschaufeln 14, die innere Umlenkvorrichtung, die im wesentlichen als Kegelstumpf 16 ausgebildet ist, sowie die äußere Umlenkvorrichtung 17 ersichtlich.

Die äußere Umlenkvorrichtung 17 ist als Profilnase 19, die in Drehrichtung b vor der Einmündung 6 angeordnet ist und die mit einer tangentialen und einer in Drehrichtung b weisenden tangentialen Wegkomponente in den Spalt 9 hineinragt. Die Profilnase 19 ist mit einer bei Einmündung weisenden ersten Umlenkfläche 20 zur Umlenkung des in den Spalt 9 einmündenden Öls versehen. Die Profilnase 19 weist ferner an ihrer von der Einmündung abgewandten Seite eine zweite Umlenkfläche 21 zur Umlenkung des dem Spalt 9 in Drehrichtung b kreisenden Öls auf.

Die Leitschaufeln 14 sind sichelförmig ausgebildet. Ihr Geometrieverlauf beginnt in einem Abstand c zur Seitenwand 18 an einem äußeren Schaufelradius ra und verläuft in Drehrichtung b mit einer radialen und einer tangentialen Komponente zu einem inneren Schaufelradius ri. Hierbei ist der Bereich des durch den Abstand c gekennzeichnete Bereiche des Spaltes 9 bevorzugt profillos gehalten.

Im Folgenden wird der Ölzufluss in seinen spezifischen Stadien, die durch Richtungspfeile a1 bis a6 symbolisiert dargestellt sind, betrachtet. Tritt das Öl bei a1 in den Ölzufluss 5 durch die Einmündung 6, so trifft es auf die äußere Umlenkvorrichtung 17 in Form der Profilnase 19, in dem es auf die erste Umlenkfläche 20 trifft und einen Umlenkimpuls in Drehrichtung b erfährt. Abhängig von der Neigung der ersten Umlenkfläche 20 zur Einströmrichtung a1 des einströmenden Öls wird das Öl verstärkt in Richtung a2, das heißt etwa in Drehrichtung b, umgelenkt. Im weiteren Verlauf wird das Öl in dem ölleitkonturfreien Raum, der durch den Abstand c zwischen Seitenwand 18 und der Ölleitkontur 12 gekennzeichnet ist, durch Flüssigkeitsreibung infolge der sich drehenden dynamischen Ölleitfläche 11 beschleunigt. Trifft das Öl bei a4 auf die zweite Umlenkfläche 21 der Profilnase 19, so wird auf das Öl ein Umlenkimpuls mit radialer Komponente zur Ölleitkontur 12 hin ausgeübt. Hierbei trifft das Öl bei a5 auf die an der statischen Ölleitfläche 10 angeordnete Ölleitkontur 12 und wird entlang der Innenseite der Schaufeln radial nach innen geleitet, um bei a6 durch die innere Umlenkvorrichtung 15 in den Ölkanal 8 umgeleitet zu werden. Das heißt, dass das durch die dynamische Ölleitfläche 11 in Drehrichtung b beschleunigte Öl durch die Ölleitkontur 12 entgegen der Zentrifugalkraft von außen nach innen umgeleitet wird. Durch die Profilnase wird somit die Gefahr vermindert, dass rotierendes Öl in den Ölzufluss 5 zurückgepumpt wird und eine Wirbelbildung im Bereich des Ölzuflusses 5 auftritt. Ferner wird eine Beschleunigung der zugeführten Strömung in Drehrichtung b erleichtert und die Anströmung der in Drehrichtung b ersten Leitschaufel 14 der Ölleitkontur 12 optimiert.

Hierbei ist es sinnvoll, die Form der Leitschaufeln 14 so auszulegen, dass ein möglichst stoßfreier Eintritt und drallfreier Austritt im gesamten Drehbereich der Getriebehohlwelle 4 gewährleistet bleibt. Zweckmäßigerweise sollte die Größe des Abstandes c bzw. der äußere Schaufelradius ra so gewählt werden dass das durch die dynamische Ölleitfläche 11 beschleunigte Öl am äußeren Schaufelradius ra die höchste Umfangsgeschwindigkeit aufweist, da hier das größte Energiepotenzial für eine Impulsumlenkung in axialer Richtung, d.h. in Richtung der Drehachse vorliegt. Durch den profilfrei gehaltenen Raum zwischen äußeren Schaufelradius ra und der Seitenwand 18 wird eine bessere Schaufelumströmung und eine beruhigtere Anströmung der nachfolgenden Schaufeln erzielt. Die Schaufelvorderkante 22 in Höhe des äußeren Schaufelradius ra weist eine konvexgerundete Form auf, um eine Umströmung der Schaufeln durch das Öl zu optimieren und um Wirbelbildung zu vermeiden, die sogar Ölfluss in die Ölleitkontur 12 blockieren kann, so dass das Öl unter Umständen in den Ölzufluss 5 zurückgedrückt werden kann.

Die Leitschaufeln 14 laufen an ihrem äußeren Schaufelradius ra in einem in Fig. 3 gezeigtem äußeren Anstellwinkel α aus. Der optimale äußere Anstellwinkel α bewegt sich, abhängig von den Betriebsbedienungen wie Drehzahl und Temperatur sowie von der Viskosität des Öles, in einem Bereich von etwa 0° bis etwa 30° zur tangentialen Richtung. Bevorzugt wird ein nahezu tangentialer äußerer Anstellwinkel α etwa von 0° bis etwa 12°, um die Strömung in die Ölleitkontur 12 nicht zu verzögern und eine Wirbelbildung zu vermeiden, das heißt, um einen möglichst konstanten Ölmassenstrom zu erhalten. Die Leitschaufeln 14 laufen an ihrem inneren Schaufelradius ri in einem inneren Anstellwinkel β von etwa 60° bis etwa 100° zur tangentialen Richtung aus. Um jedoch einen möglichst radialen Strömungsverlauf bei a3 zu erzielen, wird ein innerer Anstellwinkel β von etwa 90° bevorzugt.

Bei a6 trifft das Öl auf die innere Umlenkvorrichtung 15 in Form eines Kegelstumpfes 16, durch die das Öl in den Ölkanal 8 bzw. in die Getriebehohlwelle 4 umgelenkt wird. Durch die Rotation der Getriebehohlwelle 4 wird das Öl gegen ihre Innenwandung gedrückt und kann über entsprechende Bohrungen zu schmierenden Stellen zugeleitet werden.

### Bezugszeichenliste

- 1: Ölleitvorrichtung
- 2: Getriebegehäuse
- 3: Lager
- 4: Getriebehohlwelle
- 5: Ölzufluss
- 6: Einmündung
- 7: Ölleiteinrichtung
- 8: Ölkanal
- 9: Spalt
- 10: Statische Ölleitfläche
- 11: Dynamische Ölleitfläche
- 12: Ölleitkontur
- 13: Vorsprung
- 14: Leitschaufel
- 15: Innere Umlenkvorrichtung
- 16: Kegelstumpf
- 17: Äußere Umlenkvorrichtung
- 18: Seitenwand
- 19: Profilnase
- 20: Erste Umlenkfläche
- 21: Zweite Umlenkfläche
- 22: Schaufelvorderkante
- a: Ölrichtungspfeil
- b: Drehrichtung
- c: Abstand
- d: Drehachse
- ra: Äußerer Schaufelradius
- ri: Innerer Schaufelradius
- α: Äußerer Anstellwinkel
- α: Innerer Anstellwinkel

## Patentansprüche

1. Ölleitvorrichtung zur Umlenkung von Öl innerhalb eines Getriebegehäuses (2) aus einem Ölzufluss in einen Ölkanal (8) oder dergleichen mit einer zwischen Ölzufluss (5) und Ölkanal (8) angeordneten Ölleiteinrichtung (7), die mit zwei sich gegenüberliegenden, einen Spalt (9) bildenden Ölleitflächen (10, 11) versehen ist, wobei wenigstens eine der Ölleitflächen (10, 11) um eine Drehachse (d) senkrecht zur Ölleitfläche (10/11) drehbar angeordnet ist, wobei eine der Ölleitflächen (10/11) eine Ölleitkontur (12) aufweist, mit der Öl in radialer Richtung dem Ölkanal (8) zuleitbar ist, und wobei die Ölleitfläche (10) mit der Ölleitkontur (12) an dem Getriebegehäuse (2) angeordnet ist und eine statische Ölleitfläche (10) bildet, **dadurch gekennzeichnet, dass** umfänglich um die Ölleitkontur (12) eine Seitenwand (18) angeordnet ist, die mit einer Einmündung (6) der Ölzufuhr in den Spalt (9) versehen ist.

2. Ölleitvorrichtung nach Anspruch 1,**dadurch gekennzeichnet, dass** die Ölleitkontur (12) mit mindestens einer Nut und/oder einem Vorsprung (13) zur Ausbildung von mindestens einer Leitschaufel (12) versehen ist, die in Drehrichtung (b) von einem äußeren Schaufelradius (ra) zu einem inneren Schaufelradius (ri) der Ölleitfläche (11) einen Geometrieverlauf mit einer radialen und einer tangentialen Komponente aufweist.

3. Ölleitvorrichtung nach Anspruch 2, **dadurch gekennzeichnet , dass** die Leitschaufel (14) sichelförmig ausgebildet ist.

4. Ölleitvorrichtung nach Anspruch 2 oder 3, **dadurch gekennzeichnet , dass** der äußere Schaufelradius (ra) in einem Abstand (c) zu der Seitenwand (18) in dem Spalt (9) angeordnet ist.

5. Ölleitvorrichtung nach einem der Ansprüche 2 bis 4, **dadurch gekennzeichnet, dass** die Leitschaufel (14) an ihrem äußeren Schaufelradius (a) in einem äußeren Anstellwinkel (α) von etwa 0° bis etwa 30° zur tangentialen Richtung ausläuft.

6. Ölleitvorrichtung nach Anspruch 5, **dadurch gekennzeichnet, dass** der äußere Anstellwinkel (α) etwa 0° bis etwa 12° beträgt.

7. Ölleitvorrichtung nach einem der Ansprüche 2 bis 6, **dadurch gekennzeichnet, dass** die Leitschaufel (14) an ihrem inneren Schaufelradius (ri) in einem inneren Anstellwinkel (β) von etwa 70° bis etwa 100° zur tangentialen Richtung ausläuft.

8. Ölleitvorrichtung nach Anspruch 7, **dadurch gekennzeichnet, dass** der innere Anstellwinkel (β) etwa 90° beträgt.

9. Ölleitvorrichtung nach einem der Ansprüche 2 bis 8, **dadurch gekennzeichnet, dass** die Leitschaufel (14) an ihrem äußeren Schaufelradius (ra) eine konvex gerundete Schaufelvorderkante (22) aufweist.

10. Ölleitvorrichtung nach einem der Ansprüche 2 bis 9, **dadurch gekennzeichnet, dass** die Ölleiteinrichtung (7) eine an der Einmündung (6) angeordnete äußere Umlenkvorrichtung (17) aufweist, durch die auf das in den Spalt (9) einmündende Öl ein Umlenkimpuls in Drehrichtung (b) der Ölleitfläche (11) ausgeübt wird.

11. Ölleitvorrichtung nach Anspruch 10, **dadurch gekennzeichnet, dass** die äußere Umlenkvorrichtung (17) als Profilnase (19) ausgebildet ist, die in Drehrichtung vor der Einmündung (6) angeordnet ist, mit einer radialen und einer in Drehrichtung (b) weisenden, tangentialen Wegkomponente in den Spalt (9) hineinragt und mit einer zur Einmündung (6) weisenden ersten Umlenkfläche (20) zur Umlenkung des in den Spalt (9) einmündenden Öls versehen ist.

12. Ölleitvorrichtung nach Anspruch 10 oder 11, **dadurch gekennzeichnet, dass** die äußere Umlenkvorrichtung (17) an ihrer von der Einmündung (6) abgewandten Seite eine zweite Umlenkfläche (21) aufweist, durch die auf das in dem Spalt (9) zwischen Seitenwand (18) und Ölleitkontur (12) bewegte Öl ein Umlenkimpuls mit radialer Komponente zu der Ölleitkontur (12) hin ausgeübt wird.

13. Ölleitvorrichtung nach einem der Ansprüche 1 bis 12, **dadurch gekennzeichnet, dass** die Ölleiteinrichtung (7) eine in radialer Richtung an die Ölleitkontur (12) anschließende innere Umlenkvorrichtung (15) zur Umlenkung des durch die Ölleitkontur (12) radial zugeleiteten Öls aus dem Spalt in den Ölkanal (8) aufweist.

14. Ölleitvorrichtung nach Anspruch 13, **dadurch gekennzeichnet, dass** die innere Umlenkvorrichtung (15) eine im wesentlichen konisch zulaufende Form aufweist, deren Basis in der Mitte der statischen Ölleitfläche (10) angeordnet ist und die sich mit ihrem zulaufenden Ende in den Ölkanal (8) hinein erstreckt.

15. Ölleitvorrichtung nach Anspruch 14, **dadurch gekennzeichnet, dass** der Ölkanal (8) als Getriebehohlwelle (4) ausgebildet ist.

16. Ölleitvorrichtung nach einem der Ansprüche 1 bis 15, **dadurch gekennzeichnet, dass** die statische Ölleitfläche (10) einstückig mit dem Getriebegehäuse (2) verbunden ist.

17. Ölleitvorrichtung nach einem der Ansprüche 1 bis 15, **dadurch gekennzeichnet, dass** die statische Ölleitfläche (10) als separater Einsatz ausgeführt ist und im Getriebegehäuse (2) eingesetzt ist.

18. Verwendung einer Ölleitvorrichtung nach einem der vorherigen Ansprüche, **dadurch gekennzeichnet, dass** mit der Ölleitvorrichtung eine beliebige Flüssigkeit gefördert wird.

## Claims

1. Oil guide device for deflecting oil within a transmission housing (2) from an oil supply into an oil duct (8) or the like, having an oil guide device (7) arranged between the oil supply (5) and the oil duct (8), which oil guide device (7) is provided with two opposing oil guide faces (10, 11) which form a gap (9), with at least one of the oil guide faces (10, 11) being arranged so as to be rotatable about a rotational axis (d) perpendicularly with respect to the oil guide face (10, 11), with one of the oil guide faces (10, 11) having an oil guide contour (12), by means of which oil can be conveyed in the radial direction to the oil duct (8), and with the oil guide face (10) with the oil guide contour (12) being arranged on the transmission housing (2) and forming a stationary oil guide face (10), **characterized in that** a side wall (18) is arranged peripherally around the oil guide contour (12), which side wall (18) is provided with an opening-out point (6) of the oil supply into the gap (9).

2. Oil guide device according to Claim 1, **characterized in that** the oil guide contour (12) is provided with at least one groove and/or one projection (13) for forming at least one guide blade (12) which, in the rotational direction (b), has a geometric profile with a radial and a tangential component from an outer blade radius (ra) to an inner blade radius (ri) of the oil guide face (11).

3. Oil guide device according to Claim 2, **characterized in that** the guide blade (14) is sickle-shaped.

4. Oil guide device according to Claim 2 or 3, **characterized in that** the outer blade radius (ra) is arranged in the gap (9) with a spacing (c) with respect to the side wall (18).

5. Oil guide device according to one of Claims 2 to 4, **characterized in that** the guide blade (14) ends at its outer blade radius (ra) with an outer angle of incidence (α) of approximately 0° to 30° with respect to the tangential direction.

6. Oil guide device according to Claim 5, **characterized in that** the outer angle of incidence (α) is approximately 0° to approximately 12°.

7. Oil guide device according to one of Claims 2 to 6, **characterized in that** the guide blade (14) ends at its inner blade radius (ri) with an inner angle of incidence (β) of approximately 70° to 100° with respect to the tangential direction.

8. Oil guide device according to Claim 7, **characterized in that** the inner angle of incidence (β) is approximately 90°.

9. Oil guide device according to one of Claims 2 to 8, **characterized in that** the guide blade (14) has a convexly rounded leading blade edge (22) at its outer blade radius (ra).

10. Oil guide device according to one of Claims 2 to 9, **characterized in that** the oil guide device (7) has an outer deflecting device (17) arranged at the opening-out point (6), by means of which outer deflecting device (17) a deflecting impetus in the rotational direction (b) of the oil guide face (11) is imparted to oil which issues into the gap (9).

11. Oil guide device according to Claim 10, **characterized in that** the outer deflecting device (17) is embodied as a profiled lug (19) which is arranged in the rotational direction upstream of the opening-out point (6), projects into the gap (9) with a radial path component and with a tangential path component which points in the rotational direction (b), and is provided with a first deflecting face (20), which points towards the opening-out point (6), for deflecting the oil which issues into the gap (9).

12. Oil guide device according to Claim 10 or 11, **characterized in that** the outer deflecting device (17) has, on its side facing away from the opening-out point (6), a second deflecting face (21), by means of which a deflecting impetus with a radial component towards the oil guide contour (12) is imparted to the oil which moves in the gap (9) between the side wall (18) and the oil guide contour (12).

13. Oil guide device according to one of Claims 1 to 12, **characterized in that** the oil guide device (7) has an inner deflecting device (15), which adjoins the oil guide contour (12) in the radial direction, for deflecting the oil, which is conducted radially through the oil guide contour (12), from the gap into the oil duct (8).

14. Oil guide device according to Claim 13, **characterized in that** the inner deflecting device (15) has a substantially conically tapering shape whose base is arranged in the centre of the static oil guide face (10) and which extends with its tapering end into the oil duct (8).

15. Oil guide device according to Claim 14, **characterized in that** the oil duct (8) is embodied as a hollow transmission shaft (4).

16. Oil guide device according to one of Claims 1 to 15, **characterized in that** the static oil guide face (10) is connected in one piece to the transmission housing (2).

17. Oil guide device according to one of Claims 1 to 15, **characterized in that** the static oil guide face (10) is embodied as a separate insert and is inserted into the transmission housing (2).

18. Use of an oil guide device according to one of the preceding claims, **characterized in that** any desired liquid can be conveyed by means of the oil guide device.

## Revendications

1. Dispositif de guidage d'huile pour dévier de l'huile, à l'intérieur d'un carter de transmission (2), depuis une arrivée d'huile dans un canal d'huile (8) ou dans un dispositif similaire, avec une installation de guidage d'huile (7) disposée entre l'arrivée d'huile (5) et le canal d'huile (8), munie de deux surfaces de guidage d'huile (10, 11) se faisant face et formant une fente (9), au moins l'une des surfaces de guidage d'huile (10, 11) étant disposée de manière tournante autour d'un axe (d) perpendiculaire à la surface de guidage d'huile (10, 11), l'une des surfaces de guidage d'huile (10, 11) présentant un contour de guidage d'huile (12) au moyen duquel de l'huile peut être amenée, dans la direction radiale, au canal d'huile (8), et la surface de guidage d'huile (10) étant disposée avec le contour de guidage d'huile (12) sur le carter de transmission (2) et formant une surface de guidage d'huile statique (10), **caractérisé en ce qu'**une paroi latérale (18), munie d'une entrée (6) de l'arrivée d'huile dans la fente (9), est disposée de manière périphérique autour du contour de guidage d'huile (12).

2. Dispositif de guidage d'huile selon la revendication 1, **caractérisé en ce que** le contour de guidage d'huile (12) est muni d'au moins une rainure et/ou d'une saillie (13) pour former au moins une pale de guidage (14) qui présente, dans la direction de la rotation (b), depuis un rayon de pale extérieur (ra) jusqu'à un rayon de pale intérieur (ri) de la surface de guidage d'huile (11), un tracé géométrique avec une composante radiale et une composante tangentielle.

3. Dispositif de guidage d'huile selon la revendication 2, **caractérisé en ce que** la pale de guidage (14) est réalisée en forme de croissant.

4. Dispositif de guidage d'huile selon la revendication 2 ou 3, **caractérisé en ce que** le rayon de pale extérieur (ra) est disposé dans la fente (9) à une distance (c) de la paroi latérale (18).

5. Dispositif de guidage d'huile selon l'une des revendications 2 à 4, **caractérisé en ce que** la pale de guidage (14) se termine, sur son rayon de pale extérieur (ra), à un angle d'incidence extérieur (α) d'environ 0° à environ 30° par rapport à la direction tangentielle.

6. Dispositif de guidage d'huile selon la revendication 5, **caractérisé en ce que** l'angle d'incidence extérieur (α) est d'environ 0° à environ 12°.

7. Dispositif de guidage d'huile selon l'une des revendications 2 à 6, **caractérisé en ce que** la pale de guidage (14) se termine, sur son rayon de pale intérieur (ri), à un angle d'incidence intérieur (β) d'environ 70° à environ 100° par rapport à la direction tangentielle.

8. Dispositif de guidage d'huile selon la revendication 7, **caractérisé en ce que** l'angle d'incidence intérieur (β) est d'environ 90°.

9. Dispositif de guidage d'huile selon l'une des revendications 2 à 8, **caractérisé en ce que** la pale de guidage (14) présente, sur son rayon de pale extérieur (ra), un bord avant de pale (22) convexe arrondi.

10. Dispositif de guidage d'huile selon l'une des revendications 2 à 9, **caractérisé en ce que** l'installation de guidage d'huile (7) est munie d'un dispositif de déviation extérieur (17) disposé à l'entrée (6), au moyen duquel une impulsion de déviation dans la direction de la rotation (b) de la surface de guidage d'huile (11) est exercée sur l'huile pénétrant dans la fente (9).

11. Dispositif de guidage d'huile selon la revendication 10, **caractérisé en ce que** le dispositif de déviation extérieur (17) est réalisé sous la forme d'un nez (19) profilé disposé, dans la direction de la rotation, avant l'entrée (6), qui fait saillie dans la fente (9) avec une composante du tracé radiale et une composante du tracé tangentielle dirigée dans la direction de la rotation (b), et qui est muni d'une première surface de déviation (20) orientée en direction de l'entrée (6) pour dévier l'huile pénétrant dans la fente (9).

12. Dispositif de guidage d'huile selon la revendication 10 ou 11, **caractérisé en ce que** le dispositif de déviation extérieur (17) est muni, sur son côté éloigné de l'entrée (6), d'une seconde surface de déviation (21), qui exerce une impulsion de déviation avec une composante radiale en direction du contour de guidage d'huile (12) sur l'huile en mouvement dans la fente (9) entre la paroi latérale (18) et le contour de guidage d'huile (12).

13. Dispositif de guidage d'huile selon l'une des revendications 1 à 12, **caractérisé en ce que** l'installation de guidage d'huile (7) est munie d'un dispositif de déviation intérieur (15) placé, dans la direction radiale, immédiatement après le contour de guidage d'huile (12), pour dévier l'huile amenée radialement par le contour de guidage d'huile (12) de la fente dans le canal d'huile (8).

14. Dispositif de guidage d'huile selon la revendication 13, **caractérisé en ce que** le dispositif de déviation intérieur (15) est sensiblement en forme de cône se refermant, dont la base est disposée au milieu de la surface de guidage d'huile statique (10) et qui s'étend, par son extrémité se refermant, à l'intérieur du canal d'huile (8).

15. Dispositif de guidage d'huile selon la revendication 14, **caractérisé en ce que** le canal d'huile (8) est réalisé sous la forme d'un arbre de transmission creux (4).

16. Dispositif de guidage d'huile selon l'une des revendications 1 à 15, **caractérisé en ce que** la surface de guidage d'huile statique (10) est reliée d'un seul tenant avec le carter de transmission (2).

17. Dispositif de guidage d'huile selon l'une des revendications 1 à 15, **caractérisé en ce que** la surface de guidage d'huile statique (10) est réalisée sous la forme d'un insert séparé et mise en place dans le carter de transmission (2).

18. Utilisation d'un dispositif de guidage d'huile selon l'une des revendications précédentes, **caractérisée en ce que** le dispositif de guidage d'huile permet le transport d'un liquide quelconque.
